# FASCICULE DE BREVET EUROPEEN

(11) **EP 2 500 117 B1**
(45) Date de publication et mention de la délivrance du brevet: **02.10.2013**
(21) Numéro de dépôt: 12156605.3
(22) Date de dépôt: 22.02.2012
(51) Int. Cl.: B21D 39/03, F16B 5/04, F41H 5/013, F16B 5/06

(54) **Structure de tôles assemblées par embrèvement et procédé d'assemblage d'une telle structure**
Blechstruktur, die durch Einfalzung verbunden ist, und Zusammenbauverfahren einer solchen Struktur
Structure of sheets assembled by dimpling and method for assembling such a structure

(30) Priorité: 14.03.2011 FR 1100767
(43) Date de publication de la demande: 19.09.2012
(73) Titulaire: NEXTER Systems, 42328 Roanne (FR)
(72) Inventeur: Prybilski, Christian, 18023 BOURGES CEDEX (FR); Gavoty, Thierry, 18023 BOURGES CEDEX (FR); Linas, Edmond, 18023 BOURGES CEDEX (FR)
(74) Mandataire: Chaillot, Geneviève

(56) Documents cités:
- JP-U- H 065 726
- US-A- 2 630 175
- US-A1- 2005 132 873
- US-A1- 2009 142 129

## Description

Le domaine technique de l'invention est celui des structures de tôles assemblées par embrèvement et des procédés d'assemblage associés, et en particulier des structures de tôles permettant de former la caisse mécanosoudée d'un véhicule blindé.

La construction de caisses de véhicules nécessite de réaliser des assemblages de surfaces minces telles que des tôles. Souvent dans ce type d'assemblages, une première tôle reçoit une seconde tôle en appui sur la tranche. Quand il s'agit de la caisse d'un véhicule blindé, il est particulièrement nécessaire que ces appuis soient robustes et précis afin d'assurer la résistance de la caisse aux agressions balistiques. La demande de brevet US2005/01328723 fait état d'une technique bien connue où des tôles sont assemblées entre elles par embrèvement, ce qui consiste à emmancher une série de languettes dépassant du bord d'une des tôles dans des rainures correspondantes de l'autre tôle. Les rainures sont nommées plus couramment mortaises et les languettes tenons. Cette méthode permet d'avoir des appuis solides entre les tôles et d'avoir des positionnements précis. Après assemblage la solidarisation définitive des tôles peut être assurée par soudage par exemple.

Si les propriétés mécaniques de l'assemblage ainsi réalisé sont très satisfaisantes, en revanche l'opération d'assemblage des tôles est très délicate. En effet, l'opération d'assemblage suppose que tous les tenons pénètrent simultanément dans les mortaises correspondantes.

Ceci est difficilement réalisable en pratique car cela occasionne des coincements dus aux multiples alignements à assurer entre les différents couples tenons/mortaises. L'opération peut être simplifiée en jouant sur les tolérances entre tenons et mortaises ou en jouant sur la flexion des matériaux des tôles. Ce palliatif n'est pas envisageable quand il s'agit de tôles de blindage qui requièrent une grande précision entre tenons et mortaises et qui ne sont pas flexibles. De plus les tôles de blindage sont particulièrement lourdes et encombrantes. Pour résoudre ce problème d'assemblage, l'invention propose de réaliser les assemblages de chaque couple tenon/mortaise les uns après les autres. Pour cela aucun tenon ne présente une longueur identique ce qui permet d'opérer l'accostage de chaque tenon avec sa mortaise correspondante indépendamment des autres couples tenon/mortaise.

Ainsi l'invention a pour objet une structure assemblée par embrèvement comportant au moins une première tôle comportant sur un de ses bords une série de tenons correspondant aux mortaises d'une seconde tôle, structure assemblée par embrèvement caractérisée en ce que chaque tenon a une longueur L différente de celle des autres tenons,

Avantageusement, la différence de hauteur H entre deux tenons sera supérieure à l'épaisseur E de la seconde tôle mortaisée.

Selon un mode de réalisation, la première tôle comportant les tenons est plane.

Selon un autre mode de réalisation la première tôle comportant les tenons n'est pas plane.

La première tôle comportant les tenons pourra ainsi être tubulaire.

Selon une variation de l'invention, les tenons de la série sont ordonnés du tenon ayant la plus grande longueur au tenon ayant la plus petite longueur.

Avantageusement, les tenons pourront être régulièrement répartis le long du bord de la première tôle.

L'invention a également pour objet un procédé d'assemblage par embrèvement d'une structure comportant au moins une première tôle comportant sur un de ses bords une série de tenons correspondant aux mortaises d'une seconde tôle, procédé caractérisé en ce que:
on fait accoster puis pénétrer chaque tenon dans sa mortaise correspondante en suivant l'ordre du tenon le plus long au tenon le plus court, puis on amène le bord de la première tôle en appui avec la seconde tôle.

Avantageusement, après appui des tôles l'une sur l'autre, on soudera les tôles ensemble.

Selon une autre caractéristique, après soudure on arase les tenons au niveau de la surface de la seconde tôle.

L'invention sera mieux comprise à la lecture de la description suivante, description illustrée par les dessins annexés dans lesquels:
La figure 1 représente une vue de coté d'une tôle comportant des tenons.
La figure 2 représente une vue de la phase d'assemblage de deux tôles planes.
La figure 3 représente une vue en perspective d'un assemblage de tôles planes selon l'invention.
La figure 4 représente une vue en perspective d'un tube et d'une tôle prêts à l'assemblage selon l'invention.

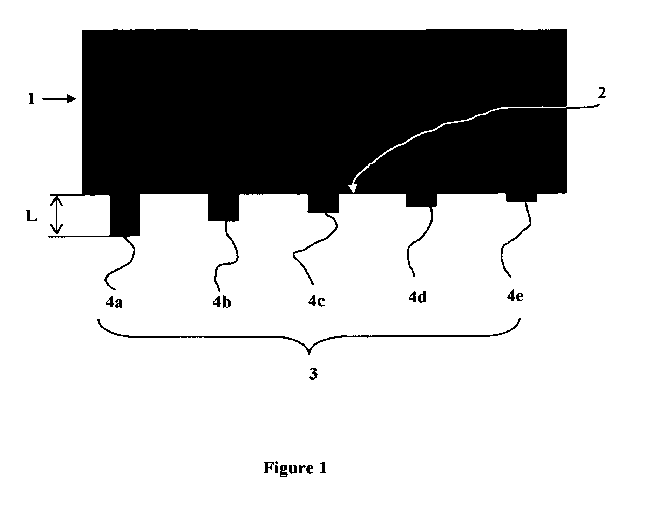

Selon la figure 1 et selon un premier mode de réalisation de l'invention, une première tôle 1 comporte sur un bord 2 une série 3 de tenons 4a à 4e. Chaque tenon 4a à 4e constitue une languette dépassant du bord 2 d'une longueur L. La longueur L de chaque tenon 4a à 4e est différente de celle des autres tenons 4a à 4e. Sur le mode de réalisation représenté, les tenons 4a à 4e sont ordonnés au sein de la série 3 selon une progression régulière de leur longueur (progression croissante ou décroissante suivant le sens dans lequel on considère la série 3). On notera que les tenons 4a à 4e sont régulièrement répartis le long du bord 2 (les distances entre deux tenons consécutifs sont toutes égales).

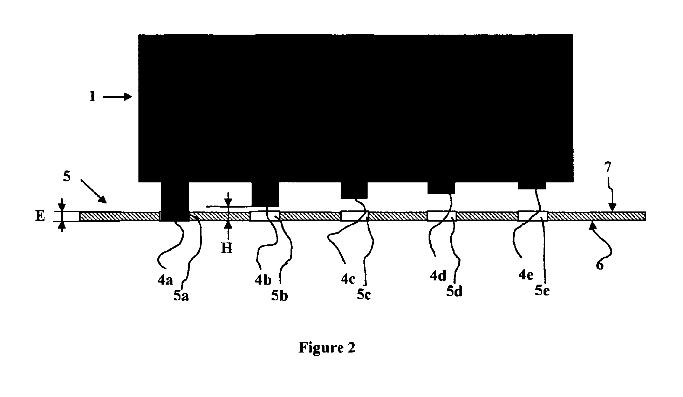

Selon la figure 2, la première tôle 1 est représentée en phase d'accostage d'une seconde tôle 5 qui comporte des mortaises 5a à 5e. Le premier point d'accostage entre les deux tôles 1 et 5 se situe au niveau d'un premier et unique tenon 4a qui pénètre une première mortaise 5a. On notera que tous les autres tenons 4b à 4e sont alignés avec leur mortaise respective 5b à 5e et placés à distance de la tôle 5. On remarque aussi que la différence de hauteur H entre deux tenons consécutifs 4a et 4b est supérieure à l'épaisseur E de la seconde tôle 5.

Ainsi seul le premier tenon 4a est engagé dans la première mortaise 5a. La différence de hauteur H permet ainsi de positionner le tenon suivant 4b malgré un défaut de planéité. Les autres tenons 4b à 4e sont libres. En poursuivant l'opération d'assemblage le second point d'accostage se fera au niveau d'un second tenon 4b ayant la plus grande longueur après le premier tenon 4a. Il en sera ainsi pour toute l'opération d'assemblage ou chaque tenon sera engagé dans sa mortaise en respectant l'ordre de taille et en allant du tenon le plus long au tenon le plus court. On note qu'ainsi la phase d'accostage est simplifiée puisque qu'elle est toujours localisée au niveau d'un seul couple tenon/mortaise à la fois.

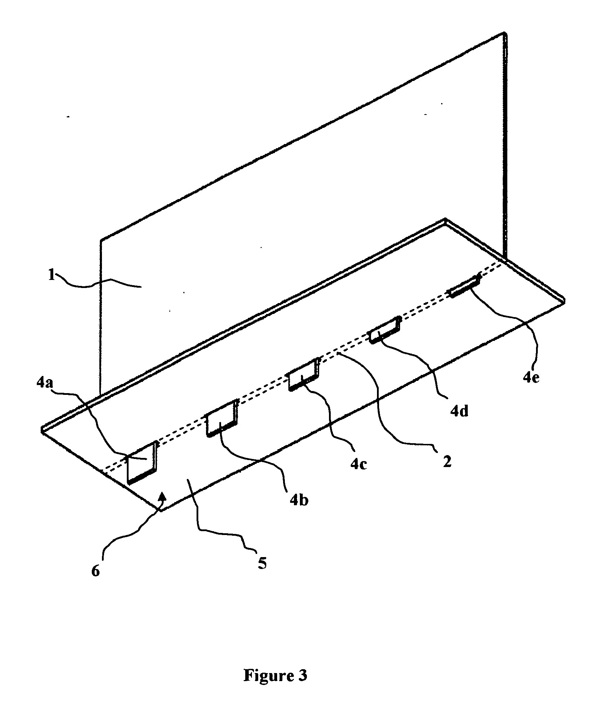

Selon la figure 3, l'assemblage est achevé. Tous les tenons 4a à 4e sont enfoncés à fond de manière à ce que le bord 2 (en pointillés sur la figure) de la première tôle 1 porte sur toute sa longueur sur la seconde tôle 5.

Après soudage de la première tôle 1 sur la seconde tôle 5 les tenons 4a à 4e pourront être arasés pour ne pas dépasser de la surface inférieure 6 de la seconde tôle 5. Le soudage est réalisé au niveau de la surface supérieure 7 de la seconde tôle 5

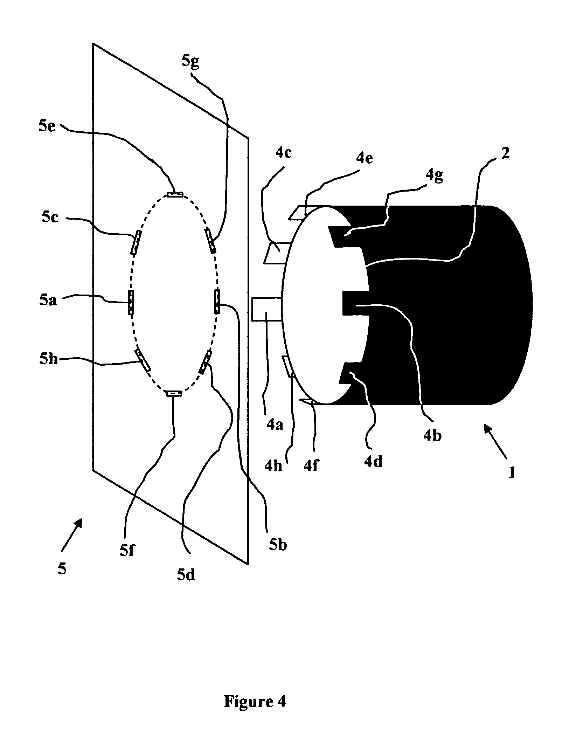

Selon la figure 4, et selon un second mode de réalisation la première tôle 1 n'est pas plane et présente une forme tubulaire (par exemple cylindrique de révolution). La seconde tôle 5 présente des mortaises 5a à 5h en forme de portions de cercle en regard des tenons 4a à 4h correspondants de la première tôle 1. Sur cette figure, les tenons 4a à 4h ne respectent pas un ordre décroissant (ou croissant progressif) dans leur répartition le long du bord 2 mais ils sont placés de telle façon que, lors de l'assemblage (opération non représentée), le tenon de longueur immédiatement inférieure à celle de celui qui est assemblé est sensiblement diamétralement opposé. De cette manière il est plus aisé de garantir un accostage perpendiculaire de la première tôle 1 sur la seconde tôle 5. Une telle répartition des tenons dans la série est envisageable également pour une tôle plane ou non tubulaire. Pour cela les tenons seront répartis dans la série de manière à ce que le tenon en cours de montage soit le plus éloigné possible du tenon suivant dans l'ordre de montage.

## Revendications

1. Structure assemblée par embrèvement comportant au moins une première tôle (1) comportant sur un de ses bords (2) une série de tenons (4a à 4e) correspondant aux mortaises (5a à 5e) d'une seconde tôle (5), structure assemblée par embrèvement **caractérisée en ce que** chaque tenon (4a à 4e) a une longueur L différente de celle des autres tenons (4a à 4e).

2. Structure assemblée par embrèvement selon la revendication 1, **caractérisée en ce que** la différence de hauteur (H) entre deux tenons (4a à 4e) est supérieure à l'épaisseur (E) de la seconde tôle (5) mortaisée.

3. Structure assemblée par embrèvement selon une des revendications 1 à 2, **caractérisée en ce que** la première tôle (1) comportant les tenons (4a à 4e) est plane.

4. Structure assemblée par embrèvement selon une des revendications 1 à 2, **caractérisée en ce que** la première tôle (1) comportant les tenons (4a à 4e) n'est pas plane.

5. Structure assemblée par embrèvement selon la revendication 4, **caractérisée en ce que** la première tôle (1) comportant les tenons (4a à 4h) est tubulaire.

6. Structure assemblée par embrèvement selon une des revendications 1 à 5, **caractérisée en ce que** les tenons (4a à 4e) de la série sont ordonnés du tenon ayant la plus grande longueur au tenon ayant la plus petite longueur.

7. Structure assemblée par embrèvement selon une des revendications 1 à 6, **caractérisée en ce que** les tenons (4a à 4e) sont régulièrement répartis le long du bord (2) de la première tôle (1).

8. Procédé d'assemblage par embrèvement d'une structure comportant au moins une première tôle (1) comportant sur un de ses bords (2) une série de tenons (4a à 4e) correspondant aux mortaises (5a à 5e) d'une seconde tôle (5), procédé **caractérisé en ce que**:
on fait accoster puis pénétrer chaque tenon (4a à 4e) dans sa mortaise (5a à 5e) correspondante en suivant l'ordre du tenon le plus long au tenon le plus court,
on amène le bord (2) de la première tôle en appui avec la seconde tôle (5).

9. Procédé d'assemblage par embrèvement selon la revendication 8, procédé **caractérisé en ce que**, après appui des tôles (1 et 5) l'une sur l'autre, on soude les tôles (1 et 5) ensemble.

10. Procédé d'assemblage par embrèvement selon la revendication 9, procédé **caractérisé en ce que**, après soudure, on arase les tenons (4a à 4e) au niveau de la surface de la seconde tôle (5).

## Patentansprüche

1. Durch Einfalzung verbundene Struktur, die mindestens ein erstes Blech (1) aufweist, das an einem seiner Ränder (2) eine Reihe von Zapfen (4a bis 4e) aufweist, die Schlitzen (5a bis 5e) eines zweiten Blechs (5) entsprechen, wobei die durch Einfalzung verbundene Struktur **dadurch gekennzeichnet ist, dass** jeder Zapfen (4a bis 4e) eine Länge L aufweist, die sich von der der anderen Zapfen (4a bis 4e) unterscheidet.

2. Durch Einfalzung verbundene Struktur nach Anspruch 1, **dadurch gekennzeichnet, dass** der Höhenunterschied (H) zwischen zwei Zapfen (4a bis 4e) größer ist als die Dicke (E) des zweiten mit Schlitzen versehenen Blechs (5).

3. Durch Einfalzung verbundene Struktur nach einem der Ansprüche 1 bis 2, **dadurch gekennzeichnet, dass** das erste Blech (1), das die Zapfen (4a bis 4e) aufweist, eben ist.

4. Durch Einfalzung verbundene Struktur nach einem der Ansprüche 1 bis 2, **dadurch gekennzeichnet, dass** das erste Blech (1), das die Zapfen (4a bis 4e) aufweist, nicht eben ist.

5. Durch Einfalzung verbundene Struktur nach Anspruch 4, **dadurch gekennzeichnet, dass** das erste Blech (1), das die Zapfen (4a bis 4h) aufweist, röhrenförmig ist.

6. Durch Einfalzung verbundene Struktur nach einem der Ansprüche 1 bis 5, **dadurch gekennzeichnet, dass** die Zapfen (4a bis 4e) der Reihe von dem Zapfen mit der längsten Länge zum Zapfen mit der kürzesten Länge angeordnet sind.

7. Durch Einfalzung verbundene Struktur nach einem der Ansprüche 1 bis 6, **dadurch gekennzeichnet, dass** die Zapfen (4a bis 4e) entlang dem Rand (2) des ersten Blechs (1) gleichmäßig verteilt sind.

8. Verfahren zum Verbinden mittels Einfalzung einer Struktur, die mindestens ein erstes Blech (1) aufweist, das an einem seiner Ränder (2) eine Reihe von Zapfen (4a bis 4e) aufweist, die Schlitzen (5a bis 5e) eines zweiten Blechs (5) entsprechen, wobei das Verfahren **dadurch gekennzeichnet ist, dass**:
entsprechend der Reihenfolge vom längsten Zapfen zum kürzesten Zapfen jeder Zapfen (4a bis 4e) angelegt und anschließend in den entsprechenden Schlitz (5a bis 5e) gesteckt wird,
der Rand (2) des ersten Blechs auf das zweite Blech (5) gelegt wird.

9. Verfahren zum Verbinden mittels Einfalzung nach Anspruch 8, das **dadurch gekennzeichnet ist, dass** nach dem Aufeinanderlegen der Bleche (1 und 5) die Bleche (1 und 5) verschweißt werden.

10. Verfahren zum Verbinden mittels Einfalzung nach Anspruch 9, das **dadurch gekennzeichnet ist, dass** nach dem Schweißen die Zapfen (4a bis 4e) an der Oberfläche des zweiten Blechs (5) abgeglichen werden.

## Claims

1. Structure assembled by dimpling comprising at least a first sheet (1) including at one of the edges (2) thereof a series of tangs (4a to 4e) corresponding to mortises (5a to 5e) of a second sheet (5), **characterized in that** each tang (4a to 4e) has a length L different from that of other tangs (4a to 4e).

2. Structure assembled by dimpling according to Claim 1, **characterized in that** the height difference (H) between two tangs (4a to 4e) is greater than thickness (E) of the mortised second sheet (5).

3. Structure assembled by dimpling according to any of Claims 1 and 2, **characterized in that** the first sheet (1) comprising tangs (4a to 4e) is plane.

4. Structure assembled by dimpling according to any of Claims 1 and 2, **characterized in that** the first sheet (1) comprising tangs (4a to 4e) is not plane.

5. Structure assembled by dimpling according to Claim 4, **characterized in that** the first sheet (1) comprising tangs (4a to 4e) is tubular.

6. Structure assembled by dimpling according to any of Claims 1 to 5, **characterized in that** the tangs (4a to 4e) of the series are ordered from the tang having the longest length to the tang having the shortest length.

7. Structure assembled by dimpling according to any of Claims 1 to 6, **characterized in that** the tangs (4a to 4e) are regularly distributed along the edge (2) of the first sheet (1).

8. Assembly process by dimpling of a structure comprising at least a first sheet (1) including at one of the edges (2) thereof a series of tangs (4a to 4e) corresponding to mortises (5a to 5e) of a second sheet (5), process **characterized in that**:
each tang (4a to 4e) is accosted and then penetrated in the corresponding mortise (5a to 5e) thereof following the order from the longest tang to the shortest tang,
the edge (2) of the first sheet (1) abuts against the second sheet (5),

9. Assembly process by dimpling according to Claim 8, **characterized in that**, after the sheets (1 and 5) abut against each other, the sheets (1 and 5) are welded together.

10. Assembly process by dimpling according to Claim 9, **characterized in that**, after the welding step, tangs (4a to 4e) are leveled at the surface of the second sheet (5).
